# EUROPÄISCHE PATENTSCHRIFT

(11) **EP 0 720 528 B1**
(45) Veröffentlichungstag und Bekanntmachung des Hinweises auf die Patenterteilung: **31.03.1999**
(21) Anmeldenummer: 94927475.7
(22) Anmeldetag: 21.09.1994
(51) Int. Cl.: B29C 67/20, B29C 33/10

(54) **VERFAHREN ZUM HERSTELLEN VON ARTIKELN AUS EPP-SCHAUM**
PROCESS FOR MAKING ARTICLES FROM EPP FOAM
PROCEDE DE FABRICATION D'ARTICLES EN MOUSSE PARTICULAIRE DE PROPYLENE

(30) Priorität: 24.09.1993 DE 4332421
(43) Veröffentlichungstag der Anmeldung: 10.07.1996
(73) Patentinhaber: Dynamit Nobel Kunststoff GmbH, 91781 Weissenburg (DE); MANKIEWICZ GEBR. & CO., 21107 Hamburg (DE)
(72) Erfinder: SIMON, Rolf, Hermann, D-21614 Buxtehude (DE); WEIDLER, Dietmar, D-21680 Stade (DE)
(74) Vertreter: Uppena, Franz, Dr.
(86) Internationale Anmeldenummer: DE9401096
(87) Internationale Veröffentlichungsnummer: WO9508433

(56) Entgegenhaltungen:
- EP-A- 0 007 321
- EP-A- 0 112 018
- EP-A- 0 351 812
- DE-A- 1 944 602
- DE-A- 3 330 826
- US-A- 4 264 544

## Beschreibung

Die Erfindung betrifft ein Verfahren zum Herstellen von Schaumstoff-Formkörpern aus Polyolefinen. Unter Polyolefine im Rahmen der vorliegenden Erfindung sind beispielsweise Polyethylen, Polypropylen, Polystyrol oder Copolymerisate zu verstehen. Von besonderer Bedeutung sind hierbei Artikel aus expandiertem Polypropylen-Partikelschaum (Kurzform: EPP), beispielsweise für den Kfz-Innenraum (Kniepolster, Säulenverkleidungen, Einlagen für Ablagefächer, Sonnenblenden etc.)

In der DE-A-33 30 826 wird nun ein Verfahren zum Herstellen von Schaumstoff-Formkörpern durch Verschweißen von Polyolefin-Schaumstoffteilchen bei Temperaturen oberhalb des Erweichungsbereiches des Polyolefins in geschlossenen Formen beschrieben, wobei die Formen ganz oder überwiegend aus Sintermetall bestehen. Mit der Verwendung von Sintermetall als Werkstoff für die Formen soll erreicht werden, daß die Druckbeaufschlagung der Form mit Gasen, das Entspannen, die Beheizung mit Wasserdampf und die Kühlung mit Wasser nicht mehr über Düsen vorgenommen werden muß, sonderen direkt durch die Poren des Sintermetalls geschehen kann, insbesondere um die Zykluszeit zu verringern. Das eigentliche Ziel des in dieser Druckschrift beschriebenen Verfahrens besteht jedoch darin, Schaumstoff-Formkörper aus Polyolefinen bereitzustellen, die eine einwandfreie glatte, lunkerfreie und praktisch nicht abriebfähige Oberfläche aufweisen. Da jedoch die Formen aus Sintermetall eine offene Metalloberfläche mit hinterschnittenen öffnungen besitzen, gelangt häufig beim Prozeß unter Verschmutzung Material in die Poren, was dann zur Folge hat, daß die oben beschriebene angestrebte Zielsetzung hinsichtlich der Oberflächeneigenschaften des Artikels nur unbefriedigend erreicht wird.

Aus der DE-A-19 44 602 ist ferner eine Gußform zum Herstellen von Formteilen aus schäumbarem thermoplastischem Kunststoff nach dem Gieß- oder Spritzgußverfahren bekannt, und zwar unter Einsatz einer sehr fein porösen Auskleidung, insbesondere in Gestalt von Metalldrahtgeweben.

Die Aufgabe der Erfindung besteht nun darin, ein Verfahren zum Herstellen von Schaumstoff-Formkörpern, insbesondere von Artikeln aus EPP-Schaum, bereitzustellen, das bei geringer Zykluszeit zu Artikeln führt, die eine lackierfähige, gleichmäßige, geschlossene Oberfläche aufweisen, und zwar unter Verwendung einer Vorrichtung, bestehend aus das Formnest umgebenden Formteilen, dem Füller sowie den Dampfkammern und Dampfdüsen.

Gelöst wird diese Aufgabe dadurch, daß in das Formnest ein zusätzliches Formelement mit Lochstruktur eingesetzt wird, das bei möglichst gleichmäßiger Oberflächenstruktur dampfdurchlässig und dampfverteilend ist, wobei das Formelement an der Innenseite des dem Füller abgewandten Formteils anliegt.

Ferner wird ein Formelement verwendet, dessen Lochanteil bezogen auf die Gesamtoberfläche des Elementes 6 bis 65 %, insbesondere 11 bis 25 %, beträgt, wobei dessen Lochstruktur so beschaffen ist, daß eine Kugel von 0,8 mm Durchmesser, insbesondere 0,6 mm Durchmesser, nicht durch ein Loch fallen kann. Bei diesen Formelement-Parametern werden in überraschender Weise die besten Oberflächeneigenschaften des Artikels erreicht.

Als Formelement kommt vorzugsweise
- ein Sieb, insbesondere ein metallisches Sieb;
- ein Gitter, insbesondere ein metallisches Gitter; oder
- ein Vlies, insbesondere ein Polypropylenvlies oder Polyestervlies,
zur Anwendung.

Die Erfindung wird nun anhand eines Ausführungsbeispiels unter Bezugnahme auf zwei schematische Zeichnungen erläutert. Es zeigen:
Fig. 1 eine Vorrichtung mit dem zusätzlichen Formelement;
Fig. 2 ein Formelement mit Siebstruktur.

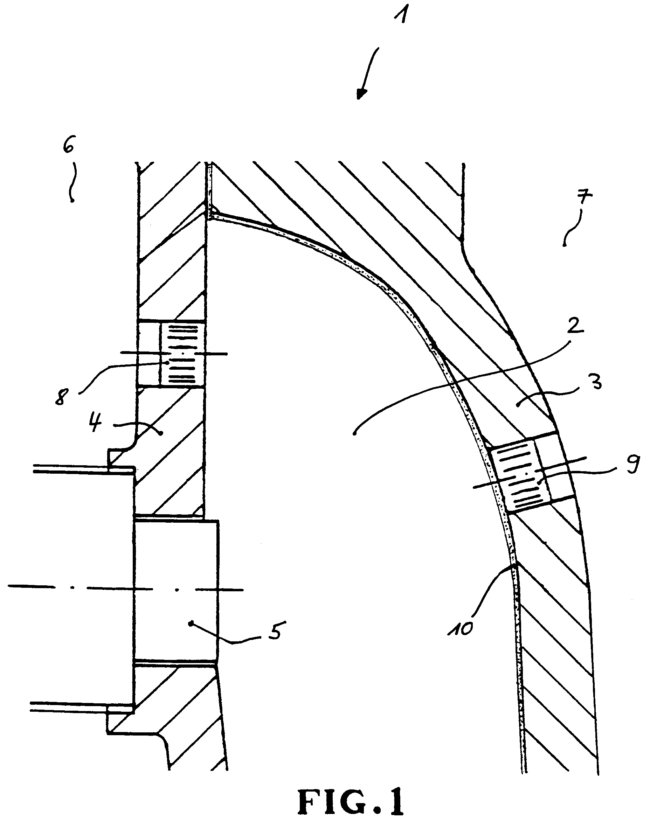

Nach Fig. 1 besteht die Vorrichtung (1) aus folgenden Teilen:
Formnest (2);
Formteile (3, 4);
Füller (5);
Dampfkammern (6, 7);
Dampfdüsen (8, 9);
erfindungsgemäßes Formelement (10).

Unter Verwendung dieser Vorrichtung laufen gemäß dem allgemeinen Stand der Technik folgende Verfahrensschritte ab:
a) Zunächst wird das Formnest mit den entsprechenden Ausgangssubstanzen gefüllt (DE-A-33 30 826), wobei man zwischen dem Crackspalt- und dem Druckfüllverfahren unterscheidet. Die Füllung nach dem Crackspaltverfahren ist drucklos möglich, eignet sich jedoch nur für flächige Artikel. In der Regel wird das Druckfüllverfahren bevorzugt, wobei der Füllerdruck etwa 1,5 bis 3,5 bar beträgt.
b) Das anschließende Verschweißen der Schaumpartikel als der wesentliche Verfahrensschritt erfolgt oberhalb des Erweichungsbereiches des Polyolefins, wobei bei der Herstellung von EPP-Schaum die Mindesttemperatur 130°C, insbesondere 140°C, beträgt. Als Dampfdruck wird in der Regel 2,5 bis 4,5 bar gewählt, wobei der Dampfdruck von der Artikeldichte abhängig ist.
c) Danach wird die Vorrichtung gekühlt. Dabei wird der Druck im Artikel während des Kühlens durch Ausdiffundieren des Wasserdampfs und der Luft abgebaut. Nachdem die Vorrichtung auf 70 bis 90°C abgekühlt ist, kann der Artikel entformt werden.
d) Artikel, deren Dichte kleiner ist als 55g/l, müssen nach der Entformung durch Wärmelagerung bei 80°C stabilisiert werden, da die enthaltene Feuchtigkeit sonst einen bleibenden Verzug und erhöhten Schrumpf verursachen kann.

Der oben beschriebene Ablauf und die Parameter des erfindungsgemäßen Verfahrens bleiben unverändert. Neu ist, daß zusätzlich in das Formnest das Formelement mit Lochstruktur eingesetzt wird.

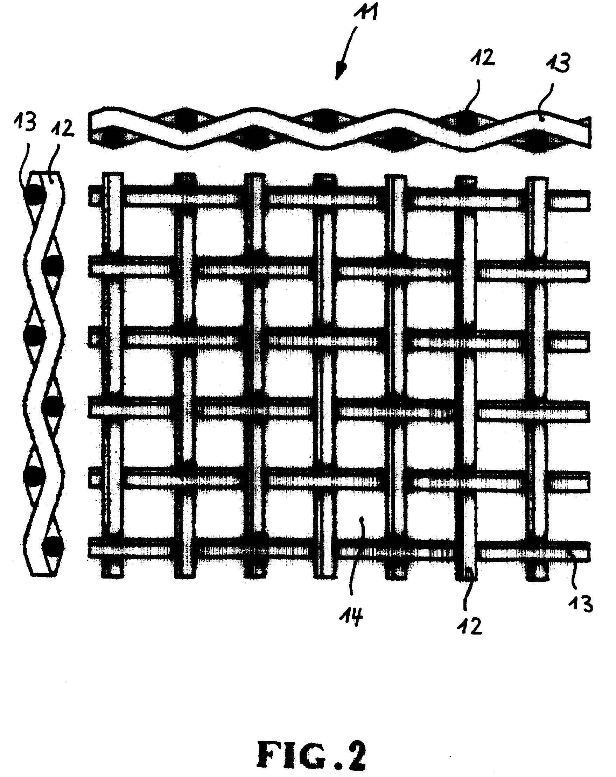

Fig. 2 zeigt in der Drauf- bzw. Seitenansicht ein Sieb (11) als Formelement (10; Fig. 1), bestehend aus Kette (12) und Schuß (13), und zwar unter Bildung einer Lochstruktur (14). Durch den Einsatz des Siebes werden die Abzeichnungen der Dampfdüsen auf der Artikeloberfläche verhindert; andererseits kann sich der Dampf auf der gesamten Oberfläche verteilen. Dies verbessert die Verschweißung der Partikel an der Oberfläche so, daß keine Zwischenvolumina entstehen. Die geschlossene Oberfläche ist lackierfähig.

Den gleichen Effekt erzielt man, wenn statt des Siebes ein Gitter oder ein Vlies in das Formnest eingelegt wird. Das Vlies haftet später am Artikel, wobei es vor der Lackierung abgezogen (Polyestervlies) oder überlackiert (Polypropylenvlies) werden kann.

## Patentansprüche

1. Verfahren zum Herstellen von Schaumstoff-Formkörpern aus Polyolefinen, insbesondere von Artikeln aus expandiertem Polypropylen-Partikelschaum (EPP), durch Verschweißen der Schaumpartikel bei Temperaturen oberhalb des Erweichungsbereiches des Polyolefins unter Verwendung einer Vorrichtung (1), bestehend aus
- das Formnest (2) umgebenden Formteilen (3, 4),
- dem Füller (5) sowie
- den Dampfkammern (6, 7) und Dampfdüsen (8, 9),
dadurch gekennzeichnet, daß
- in das Formnest (2) ein zusätzliches Formelement (10) mit Lochstruktur eingesetzt wird, das bei möglichst gleichmäßiger Oberflächenstruktur dampfdurchlässig und dampfverteilend ist, wobei das Formelement (10) an der Innenseite des dem Füller (5) abgewandten Formteiles (3) anliegt; wobei ferner
- ein Formelement (10) verwendet wird, dessen Lochanteil bezogen auf die Gesamtoberfläche des Elementes 6 bis 65 %, insbesondere 11 bis 25 %, beträgt und dessen Lochstruktur so beschaffen ist, daß eine Kugel von 0,8 mm Durchmesser, insbesondere 0,6 mm Durchmesser, nicht durch ein Loch fallen kann.

2. Verfahren nach Anspruch 1, dadurch gekennzeichnet, daß als Formelement (10) ein Sieb (11), insbesondere ein metallisches Sieb, verwendet wird.

3. Verfahren nach Anspruch 1, dadurch gekennzeichnet, daß als Formelement ein Gitter, insbesondere ein metallisches Gitter, verwendet wird.

4. Verfahren nach Anspruch 1, dadurch gekennzeichnet, daß als Formelement ein Vlies, insbesondere ein Polypropylenvlies oder Polyestervlies, verwendet wird.

## Claims

1. Method for producing shaped foamed bodies of polyolefines, in particular articles of expanded polypropylene particulate foam (EPP), by fusing the foam particles at temperatures above the softening range of the polyolefine with use of a device (1), consisting of:
- shaped portions (3, 4) surrounding the shaping cavity (2),
- the filler (5), and also
- the steam chambers (6, 7) and steam nozzles (8, 9),
characterised in that
- an additional shaping element (10) is inserted into the shaping cavity (2), which shaping element has a perforated structure and is permeable to steam and distributes steam, and has surface structure that is as uniform as possible, with the shaping element (10) resting against the inside of the shaping portion (3) that is remote from the filler (5); wherein, furthermore,
- a shaping element (10) is used, the perforated portion of which, relative to the total surface area of the element, amounts to 6 to 65%, in particular 11 to 25%, and the perforated structure of which is constituted in such a way that a sphere having a diameter of 0.8 mm, in particular a diameter of 0.6 mm, cannot fall through a hole.

2. Method according to claim 1, characterised in that a sieve (11), in particular a metal sieve, is used as the shaping element (10).

3. Method according to claim 1, characterised in that a grid, in particular a metal grid, is used as a shaping element.

4. Method according to claim 1, characterised in that a non-woven fabric, in particular a polypropylene non-woven fabric or polyester non-woven fabric, is used as a shaping element.

## Revendications

1. Procédé pour fabriquer des pièces moulées en mousse de polyoléfine, en particulier des articles à base de mousse de particules de polypropylène expansées (PPE), par agglomération thermique des particules expansées à une température supérieure au domaine de température de ramollissement de la polyoléfine et avec utilisation d'un dispositif (1) constitué
- de parties de moule (3,4) définissant l'empreinte de moule (2),
- d'un dispositif de remplissage (5), ainsi que
- de chambres à vapeur (6,7) et de tuyères à vapeur (8, 9), lequel dispositif est caractérisé en ce que
- l'on insère dans l'empreinte de moule (2) un élément de moule supplémentaire (10) ayant une structure perforée et qui, tout en ayant une structure de surface la plus régulière possible, laisse passer et répartit la vapeur, l'élément de moule (10) étant appliqué sur la face intérieure de la partie de moule (3) opposée au dispositif de remplissage (5), et en ce que
- l'on utilise un élément de moule (10) dans lequel la fraction que représentent les perforations, rapportée à la surface globale de l'élément, est comprise entre 6 et 65 %, en particulier entre 11 et 25 %, et qui a une structure de perforation telle qu'une bille ayant un diamètre de 0,8 mm, en particulier de 0,6 mm, ne peut pas tomber à travers une des perforations.

2. Procédé selon la revendication 1, caractérisé en ce que l'on utilise comme élément de moule (10) un tamis (11) en particulier un tamis métallique.

3. Procédé selon la revendication 1, caractérisé en ce que l'on utilise comme élément de moule une grille, en particulier une grille métallique.

4. Procédé selon la revendication 1, caractérisé en ce que l'on utilise comme élément de moule un non-tissé, en particulier un non-tissé en polypropylène ou en polyester.
